# EUROPÄISCHE PATENTANMELDUNG

(11) **EP 3 246 868 A1**
(43) Veröffentlichungstag der Anmeldung: **22.11.2017**
(21) Anmeldenummer: 16170127.1
(22) Anmeldetag: 18.05.2016
(51) Int. Cl.: G06Q 30/06

(54) **VERFAHREN ZUR BESTELLUNG EINES PRODUKTES**

(71) Anmelder: Pirkl, Johann, 92318 Neumarkt (DE); Pirkl, Oliver, 92283 Lauterhofen (DE); Pirkl, Daniel, 92283 Lauterhofen (DE)
(72) Erfinder: Pirkl, Johann, 92318 Neumarkt (DE); Pirkl, Oliver, 92283 Lauterhofen (DE); Pirkl, Daniel, 92283 Lauterhofen (DE)
(74) Vertreter: Lösch, Christoph Ludwig Klaus

(57) **Zusammenfassung**

Die Erfindung betrifft ein Verfahren zur Bestellung eines Produkts, aufweisend folgende Verfahrensschritte:
(a) Abspielen einer Videosequenz;
(b) Markieren eines Bildes der Videosequenz, in dem das Produkt gezeigt ist;
(c) Anzeigen des markierten Bildes;
(d) Markieren des Produktes;
(e) Anzeigen von Bestellinformationen über das Produkt; und
(f) Auslösen eines Bestellvorgangs für das Produkt.

## Beschreibung

Die Erfindung betrifft ein Verfahren zur Bestellung eines Produktes.

Bei der Betrachtung einer filmischen Darbietung stellen sich viele Personen Fragen wie etwa: Was ist das für eine Hose welche die Schauspielerin da gerade trägt? Von welchem Designer kommt das Jackett und die Krawatte? Von welchem Hersteller ist die Uhr an dem Handgelenk von dem? Welches Bild an der Wand ist das? Welche Lampe an dem Schreibtisch? Welcher Schreibtisch? Welche Kaffeetasse? Welche Felge ist auf diesem Auto? Was ist das allgemein für ein Auto? Was ist das für ein Computer? Diese Gegenstände möchte ich gerne bestellen. Beziehungsweise: Wo findet der Dreh von dem Film gerade statt? Dort würde ich gerne mal hinfliegen!

Es besteht daher allgemein das Bedürfnis Gegenstände (bzw. allgemein Produkte), die in einer filmischen Darbietung, wie einem Spielfilm, einer Fernsehserie, einer Reportage, einem Internetvideo oder ähnlichem dargestellt sind, zu erwerben (bzw. zu bestellen)oder z.B. Reisen zu angezeigten Orten zu buchen.

Bisher ist es für den Betrachter der filmischen Darbietung jedoch schwierig die Informationen über die gewünschten Produkte zu erhalten. Oftmals würde eine Unterbrechung des Betrachtens der filmischen Darbietung (z.B. um sich über die gerade gezeigten interessanten Produkte zu informieren) den Filmgenuss stören. Außerdem fehlen im Allgemeinen zuverlässige Informationen welche Gegenstände (d.h. beispielsweise von welchem Hersteller) gezeigt werden. Darüber hinaus kann sich der Betrachter im Nachhinein nur sehr bruchstückhaft und vage an die gezeigten Gegenstände erinnern.

Der Erfindung liegt daher die Aufgabe zugrunde, ein Verfahren zur Bestellung von in einer filmischen Darbietung dargestellten Produkten anzubieten, das die oben genannten Nachteile verringert.

Diese Aufgabe wird durch ein Verfahren mit den Merkmalen des Patentanspruchs 1 gelöst. Vorteilhafte Ausführungsformen sind in den Unteransprüchen beschrieben.

Erfindungsgemäß weist das Verfahren zur Bestellung eines Produkts folgende Verfahrensschritte auf: (a) Abspielen einer Videosequenz;
(b) Markieren eines Bildes der Videosequenz, in dem das Produkt gezeigt ist; (c) Anzeigen des markierten Bildes; (d) Markieren des Produktes;
(e) Anzeigen von Bestellinformationen über das Produkt; und (f) Auslösen eines Bestellvorgangs für das Produkt.

Unter einer Videosequenz wird hierbei allgemein eine zeitliche Abfolge einer Vielzahl von Einzelbildern verstanden, die einer filmischen Darbietung (z.B. Spielfilm, Reportage, Fernsehserie, Werbefilm, Internetvideo) entspricht.

Erfindungsgemäß wird zunächst die Videosequenz (d.h. die filmische Darbietung mit mindestens einem potentiell interessanten Produkt) abgespielt. Entdeckt der Betrachter ein potentiell interessantes Produkt während des Abspielens der Videosequenz, so markiert er das zugehörige Bild der Videosequenz, in dem das Produkt gezeigt ist. Dieses markierte Bild wird dann (entweder direkt nach dem Markieren oder zu einem späteren Zeitpunkt) angezeigt. Der Betrachter markiert dann das für ihn interessante Produkt im markierten Bild. Daraufhin werden Bestellinformationen über dieses Produkt angezeigt und der Betrachter kann einen Bestellvorgang für das Produkt auslösen.

Auf diese Weise kann der Betrachter Produkte, die in einer filmischen Darbietung dargestellt sind, zuverlässig und einfach bestellen.

Die Erfindung ist anhand von Ausführungsbeispielen und Zeichnungsfiguren weiter erläutert.
- Fig. 1: zeigt ein schematisches Ablaufdiagramm der einzelnen Verfahrensschritte eines Verfahrens zur Bestellung eines Produkts.
- Fig. 2: zeigt ein schematisches Ablaufdiagramm der einzelnen Verfahrensschritte eines Verfahrens zur Herstellung einer Videosequenz.

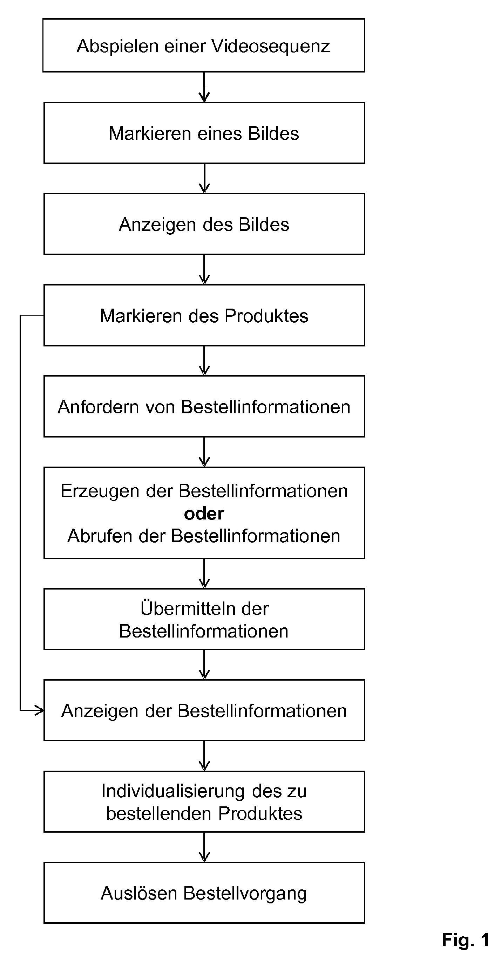

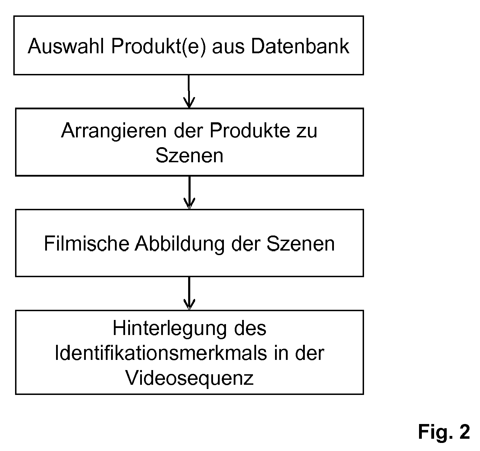

Das in Fig. 1 dargestellte Verfahren zur Bestellung eines Produkts beginnt mit dem Verfahrensschritt "Abspielen einer Videosequenz". Mit anderen Worten wird eine filmische Darbietung abgespielt, die eine Vielzahl von potentiell für den Betrachter interessante Gegenstände (Produkte) darstellt. Eine Möglichkeit zur Herstellung einer derartigen Videosequenz wird weiter unten in Bezug auf Fig. 2 näher erläutert. Das Abspielen der Videosequenz kann dabei auf einem beliebigen hierfür geeigneten Gerät erfolgen (z.B. Fernseher, Computerbildschirm, Kinoleinwand, Beamer, Bildschirm eines portablen elektronischen Gerätes der Unterhaltungs- oder Kommunikationsindustrie).

Entdeckt der Betrachter ein für ihn interessantes Produkt, so markiert (kennzeichnet) er das gerade dargestellte Bild der Videosequenz. Alternativ kann die Videosequenz angehalten werden und es werden dann im Standbild dem Betrachter die markierbaren Produkte (z.B. durch Pfeile oder Punkte) angezeigt. D.h. es erfolgt ein Markieren (Kennzeichnen) eines Bildes der Videosequenz, in dem das Produkt gezeigt ist (Schritt "Markieren des Bildes" in Fig. 1). Das Markieren erfolgt hierbei insbesondere durch Betätigen einer Taste eines Bediengerätes (z.B. Fernbedienung, Laserpointer) oder Berühren eines Touchsensors (z.B. berührungssensitiver Bildschirm eines portablen elektronischen Gerätes der Unterhaltungs- oder Kommunikationsindustrie).

Als nächstes erfolgt der Schritt "Anzeigen des Bildes", d.h. das im vorherigen Schritt durch den Betrachter markierte Bild aus der Videosequenz wird angezeigt. Dieses Anzeigen des Bildes kann hierbei entweder zeitlich unmittelbar nach dem Markieren des Bildes erfolgen oder zu einem späteren Zeitpunkt. Erfolgt das Anzeigen des Bildes unmittelbar nach dem Markieren des Bildes kann das interessierende Produkt ohne zeitliche Verzögerung sofort bestellt werden. Das Abspielen der Videosequenz wird bevorzugterweise für die Dauer des Bestellvorgangs unterbrochen, damit der Betrachter keinen Teil der filmischen Darbietung verpasst.

Es gibt jedoch Situationen, in den der Betrachter keine Unterbrechung der filmischen Darbietung und/oder keine sofortige Bestellung des Produktes wünscht. In diesem Fall erfolgt die Anzeige des markierten Bildes nicht unmittelbar nach dem Markieren des Bildes, sondern zu einem späteren Zeitpunkt. Besonders vorteilhaft ist es hierbei, die Anzeige des markierten Bildes unmittelbar nach Ende der Videosequenz vorzunehmen. Werden während des Abspielens der Videosequenz mehrere Bilder vom Betrachter markiert, so können diese in bevorzugter Weise nacheinander nach Ende des Abspielens der Videosequenz angezeigt werden.

Anschließend erfolgt ein "Markieren des Produktes", d.h. in dem angezeigten Bild der Videosequenz markiert der Betrachter das ihn interessierende Produkt. Dieses Markieren kann insbesondere durch Anclicken, Umrahmen, Einkreisen, durch einen Laserpointer oder durch Berühren eines Touchsensors erfolgen.

Sind für das markierte Produkt Bestellinformationen vorhanden (insbesondere, wenn die Bestellinformationen in der Videosequenz hinterlegt sind), so kann unmittelbar der Schritt "Anzeigen der Bestellinformationen" erfolgen. Bei den Bestellinformationen kann es sich insbesondere um Artikelbezeichnungen, Lieferbedingungen, Kaufpreise, Produktinformationen und ähnliches handeln. Diese Bestellinformationen werden dem Betrachter angezeigt. Dieser kann die Bestellinformationen gegebenenfalls modifizieren (z.B. Liefer- und Zahlungsbedingungen).

Anschließend kann der Schritt "Individualisierung des zu bestellenden Produktes" erfolgen. Hier kann insbesondere eine Bestimmung der Ausstattungsvarianten, der Farbe und/oder der Größe des zu bestellenden Produktes erfolgen. Insbesondere ist es hierbei möglich, eine z.B. virtuelle und/oder 3D-Darstellung des Produkts in Kombination mit einer z.B. virtuellen und/oder 3D-Darstellung eines menschlichen Körpers dem Betrachter darzubieten. Auf diese Weise erhält der Betrachter eine realitätsnahe visuelle Darstellung des Produkts. In besonders vorteilhafter Weise kann es sich bei der virtuellen Darstellung eines menschlichen Körpers um den Körper des Betrachters handeln. Dies erhöht die Realitätsnähe der visuellen Darstellung zusätzlich. Die virtuelle Darstellung des menschlichen Körpers kann hierbei insbesondere durch einen Körperscanner erzeugt werden.

Abschließend erfolgt der Schritt "Auslösen Bestellvorgang", d.h. es wird der eigentliche Bestellvorgang für das Produkt ausgelöst. Je nach vereinbarten Bestellbedingungen erfolgt eine Lieferung des Produkts.

Sind für das markierte Produkt keine Bestellinformationen unmittelbar in der Videosequenz hinterlegt, so erfolgt nach dem Schritt "Markieren des Produkts" der Schritt "Anfordern von Bestellinformationen", d.h. es erfolgt eine Anforderung von Bestellinformationen über das Produkt. Diese Anforderung erfolgt typischerweise durch eine rechnergestütztes Einheit (z.B. eine mobile App, eine TV-App, einen Receiver oder einen Online-PC)

Beispielsweise ist es möglich, dass die Bestellinformationen zunächst erzeugt werden müssen (Schritt "Erzeugen der Bestellinformationen"). Insbesondere kann dies durch einen automatisierten Vergleich zwischen dem im markierten Bild abgebildeten Produkt und einer Produktdatenbank, insbesondere durch ein Mustererkennungsverfahren, erfolgen. Dadurch wird es möglich, Gegenstände, die in der Videosequenz dargestellt werden, einem konkreten Produkt aus einer Produktdatenbank zuzuordnen. Anschließend werden die für dieses Produkt in der Produktdatenbank hinterlegten Bestellinformationen übermittelt (Schritt "Übermitteln der Bestellinformationen") und dem nachfolgenden Schritt "Anzeigen der Bestellinformationen" zugrunde gelegt.

Es ist auch möglich, dass das Produkt in der Videosequenz mit einem Identifikationsmerkmal versehen ist. Dann kann ein Abrufen der angeforderten Bestellinformationen durch eine Übermittlung eines das Produkt identifizierendes Identifikationsmerkmals und das Abrufen von für das Identifizierungsmerkmal in einer Datenbank hinterlegten Bestellinformationen erfolgen. Auf diese Weise können die in der Datenbank hinterlegten Bestellinformationen zentral verwaltet und ggf. aktualisiert werden.

In besonders vorteilhafter Weise ist das Identifikationsmerkmal als elektronisches Datensegment in der Videosequenz hinterlegt, insbesondere derart, dass in dem elektronischen Datensegment für jedes Bild der Videosequenz das Identifikationsmerkmal des jeweils sichtbaren Produkts beinhaltet ist. Ein Verfahren zur Herstellung einer derartigen Videosequenz ist in Fig. 2 dargestellt und wird weiter unten genauer beschrieben.

Ein Ausführungsbeispiel des Verfahrens zur Bestellung eines Produkts ist auch im Folgenden beschrieben:
Als Abspielgerät für die Videosequenz wird ein Smart-TV mit Internetverbindung verwendet. Der Betrachter sieht sich gerade eine Fernsehserie an und entdeckt an einem Schauspieler oder einer Schauspielerin ein Accessoire welches ihm gefällt. Nun drückt der Betrachter eine Taste an seiner TV-Fernbedienung. Nun wird je nach Einstellung der Zeitpunkt mit einem Code und +-...sec. des Bildes mit Ton abgespeichert, oder es öffnet sich unmittelbar ein Fenster und das Bild wird eingefroren. Im Folgenden wird von dem zweiten Fall ausgegangen. Es erfolgt folgender Ablauf:
   1. Der Betrachter sieht das "eingefrorene" Bild.
   2. Der Betrachter erkennt auf Anhieb das Produkt, welches sein Interesse geweckt hat und muss nicht zu dem Punkt zurückspulen.
   3. Der Betrachter drückt je nach Einstellung jetzt z.B. eine weitere Taste und das Bild wird gescannt oder es erscheinen bereits hinterlegte Bestellinformationen über das oder die Produkte.
   4. Bestellinformationen über die Produkte öffnen sich nun auf dem Bild.
   5. Der Betrachter wählt das Produkt seines Interesses, z.B. mit Tasten oder eine Art Laser-Maus-Funktion aus.
   6. Der Betrachter kann das Produkt nun direkt kaufen oder in einer Art Warenkorb ablegen und später kaufen.
   7. Der Betrachter kann die Zahlungsweise bestimmen.
   8. Der Betrachter kann die Versandart und Verpackung (z.B. Geschenk) wählen.
   9. Der Betrachter kann seine Identität bestätigen (z.B. Fingerabdrucksensor, Zahlencode, Sicherheitsfrage).
   10. Der Betrachter hat den Kauf (d.h. die Bestellung des Produkts) abgeschlossen.
   11. Mit der "Timeshift Funktion" kann der Betrachter die Serie weiterschauen.
   12. Das bestellte Produkt kommt je nach Versandart die nächsten Tage bei dem Betrachter an.

Um das oben beschriebene Verfahren nutzen zu können, registriert sich der Betrachter zunächst online via PC, Smartphone oder andere Art und Weise. Es sind hier die üblichen Anmeldeinformationen anzugeben, welche der Betrachter z.B. mit einem Code, einer Email oder Fingerabdruck bestätigen muss. Sollte der Betrachter an seinem Endgerät einen Fingerabdrucksensor zur Verfügung haben, kann der Betrachter seinen Fingerabdruck hinterlegen, um die Sicherheit weiter zu erhöhen.

Hat der Betrachter die Anmeldung abgeschlossen, kann der Betrachter sofort mit der Einrichtung der Endgeräte loslegen. Beispielsweise kann das zugehörige Programm auf den Endgeräten installiert werden. Ist das Programm installiert, kann der Betrachter die sicherst mögliche Verbindung zwischen seinem Konto und seinen Endgeräten herstellen. Es ist auch mögliche mehrere Konten mit dem Programm zu verbinden (z.B. bei Familien, Freunden). Ein online-Konto kann automatisch mit dem Handy, Internet und TV App synchronisiert werden. Vor jedem Anmelden überprüft das Programm, ob Sicherheitsupdates zur Verfügung stehen. Je nach Einstellung können das Anmelden des Programms und das Ausführen der Updates auch automatisch beim Starten des Endgerätes oder zu einem bestimmten Zeitpunkt durchgeführt werden. Darüber hinaus ist es möglich, dass das Programm den kompletten TV verwaltet und z.B. als Startbildschirm erscheint. Gerade bei Familien mit Kinderschutz ist diese Variante vorteilhaft.

Das Verfahren zur Bestellung eines Produkts ist nicht an bestimmte Endgeräte gebunden. Je nach Endgerät können sich jedoch einzelne Bedienschritte unterscheiden. Hier muss man unterscheiden, welches Endgerät Sie gerade mit welchem Medium nutzen. Grundsätzlich kann man als Betrachter mit den "Markierungen" wie weiter unten beschrieben umgehen. Grundsätzliche Bedienunterschiede:
- Sofortige Suche ohne "Timeshiftfunktion"
   Bei der Sofortsuche ohne "Timeshiftfunktion" wird das Bild eingefroren (Dies wird z.B. der Fall bei älteren TV Geräten und/oder Receivern sein). Der Betrachter kann nun das Bild umgehend auf Markierungen durchsuchen. Ein vor- und zurückspulen ist hier typischerweise nicht möglich. Sollten der Betrachter nicht fündig geworden sein oder der Bestellvorgang ausgelöst worden sein, wird das TV-Bild bei der aktuellen "Übertragung " weitergeführt.
- Sofortige Suche mit "Timeshiftfunktion" (Weitersehen (geräteabhängig) danach möglich)
   Bei der Sofortsuche mit der "Timeshiftfunktion" wird das Bild eingefroren. Der Betrachter kann nun das Bild umgehend auf Markierungen durchsuchen und ein Vor- sowie Zurückspulen ist hier möglich. Sollten der Betrachter nicht fündig geworden sein, den Bestellvorgang ausgelöst haben oder das Produkt zur späteren Ansicht hinterlegt haben, kann der Betrachter nun auswählen ob der Film ab den Zeitpunkt des Einfrierens zeitversetzt zur aktuellen Übertragung weitergesehen werden soll oder ob die "verlorene" Zeit überspringen und direkt zur aktuellen Übertragung umschalten werden soll.
- Speichern der Zeit und Programmdaten zum späteren Suchen der Markierungen
   Der Betrachter drückt z.B. eine Taste an der Fernbedienung und der "Timecode" mit Programminformationen wird hinterlegt. Je nach Wunsch kann der Betrachter diesen Zeitpunkt später direkt an dem Endgerät oder Online überprüfen. Der Betrachter hat auch die Möglichkeit, z.B. den Film +- ...sec. nach den Objekt von Interesse zu suchen und bei Auffindung weitere Schritte einzuleiten.

Bei dem Verfahren können grundsätzlich verschiedene Geräte verwendet werden, die Filmmaterial abspielen können. Insbesondere:
(a) Handy/Mobiltelefon/Smartphone
   Für das Handy gibt es eine App, mit der der Betrachter noch mehr Funktionen verwirklichen kann. Unter anderem:
   - QR Code lesen und generieren
   - Strichcode lesen
   - Simple Scanfunktion
   - Digitale Programmzeitung (auch hier können Aufnahmen zugeteilt werden)
   - Voller Zugriff auf die Datenbank
   - Hintergrundfunktion zum schnellen "taggen" beispielsweise über die Hometaste
   - Verbindung zum TV/Receiver beispielsweise über Wlan als Fernbedienung
   - Verbindung zu Druckern um beispielsweise digitale Rechnungen auszudrucken
   - Musik und Filmplayer.
(b) Handy mit Smartwatch/Digitales Armband
   Hier hat der Benutzer zusätzlich die Möglichkeit eine Erweiterungs-App auf seine Smartwatch zu laden, um z.B. im Kino Produkte zu "taggen" (kennzuzeichnen) ohne andere Personen dabei zu stören. Dies ist natürlich auch bei digitalen Armbändern und Gesundheitsarmbändern möglich.
(c) Smart TV mit Internetverbindung
(d) Smart TV ohne Internetverbindung
   Hier kann das Programm z.B. über USB-Stick oder Satellit installiert werden. Die Suchen erhält der Betrachter, wenn keine Internetverbindung besteht, über einen QR-Code, welcher direkt am Fernseher mithilfe von EPG-Informationen offline generiert wird.
(e) Mit den verschiedensten Receivern
(f) Im Kino
   Im Kino hat der Betrachter die Möglichkeit den Timecode bzw. die Information mithilfe der Handyapp oder mit der Handy/Smartwatchfunktion zu setzen. Auf Kinokarten und im Abspann kann ein QR-Code hinterlegt sein, den der Betrachter mit dem Handy scannen kann.
(g) DVD / BlueRay mit Informationen
   Filmstudios haben die Möglichkeit Markierungen (d.h. Bestellinformationen oder Identifikationsmerkmale) auf der DVD zu hinterlegen. Diese können dann je nach Player direkt oder per Timeline abgerufen werden. Ein nachträgliches Hinzufügen von Markierungen ist nicht möglich. Jedoch können sich bei einer Internetverbindung Markierungen mit z.B. online hinterlegten ergänzen.
(h) DVD / BlueRay ohne Informationen
   Hier kann eine Internetverbindung hergestellt werden, um die Produkte zu scannen. Des Weiteren ist eine Anbringung eines QR-Codes auf der Verpackung, der Disc oder beim Abspann möglich.
(i) Beamer
(j) 360° Cam
(k) 3D Funktion
(l) Internetvideos
(m) Virtuelle Realität
(n) MusikTV

Weitere Funktionalitäten/Ausgestaltungen des Verfahrens sind in den folgenden Punkten dargestellt:
(a) Verknüpfung mit anderen Nutzern oder Plattformen Es ist z.B. möglich bestimmte Produkte und Orte von Interesse (z.B. als Urlaubsziel) oder bereits erledigte Käufe mit Freunden z.B. auf einer Online-Plattform oder in einem Sozialen Netzwerk zu teilen. Der Betrachter kann auch sein Konto mit anderen Konten von Nutzern verbinden, um unter anderem mit Freunden zu kommunizieren oder zu sehen was Freunde gekauft haben.
(b) Vorschläge ähnliche Produkte und Kunden kauften auch Wenn der Betrachter beispielsweise eine Uhr gekauft hat, kann der Betrachter den Vorschlag "Kunden die diesen Artikel kauften, kauften auch..." erhalten, wie z.B. eine Uhr im ähnlichen Design für den Partner/die Partnerin.
(c) Bedienung bei Receivern, Fernsehern und anderen Abspielgeräten über die Richtungstasten, eine Fernbedienung mit unabhängiger Bewegungserkennung oder eine Fernbedienung mit Bewegungserkennung abhängig vom Scanner
   - Bei jeder gängigen Fernbedienung gibt es Richtungsasten. Mit diesen Tasten ist es dem Betrachter möglich sich im Menü zu bewegen und auch zwischen Markierungen im Bild hin- und herzuspringen.
   - Bei der Fernbedienung mit unabhängiger Bewegungserkennung benötigt der Betrachter kein Zusatzgerät wie z.B. einen Scanner. Der Betrachter kann sich im Menü und im Bild mit der Fernbedienung über Bewegungen durch das Menü und das Bild bewegen (ähnlich als würde man mit einem Laserpointer auf einen bestimmten Punkt zeigen).
   - Fernbedienung mit Bewegungserkennung abhängig vom Scanner Zur Durchführung des Verfahrens kann ein Scanner eingesetzt werden. Über dessen Scanfunktion ist es möglich, mit der Fernbedienung oder durch Gesten sich im Menü zu bewegen und auch zwischen Markierungen im Bild hin- und herzuspringen.
(d) Online Suchfunktion
   Wie bereits erwähnt ist es möglich, bestimmte "Timecodes" unter verschiedenen Funktionsweisen abzuspeichern um damit später an Endgerät oder online nach Produkten zu suchen. Hat der Betrachter im Moment kein Endgerät zur Hand, weil er z.B. an einem öffentlichen Ort oder bei Freunden ist, dann gibt es die Möglichkeit online eine oberflächliche Suche zu starten.
   Suchkriterien sind Beispielsweise:
   Ort, Datum, Uhrzeit, Sender, welches Produkt war es usw.?
   Hier gibt es die Möglichkeit +- ...Minuten im Bild zu suchen.
(e) Empfehlung an Freunde per Mail / Soziales Netzwerk / oder das Programm selbst
   Es gibt die Möglichkeit Empfehlungen über E-Mail, andere Plattformen oder das Programm selbst zu teilen. Kauft ein Freund des Betrachters das Produkt, bekommen der Betrachter Treuepunkte, welche er später einlösen kann.
(f) Suchfunktion mit Hinterlegung (Markierung)
   Es können Produkte, Orte, Musik uvm. z.B. in einem Film gesucht werden. Damit diese Produkte gefunden und ausgewählt werden können, müssen Filmstudios, Produktionsfirmen oder andere Firmen die Objekte mit Identifikationsmerkmalen hinterlegen. Sind die Identifikationsmerkmale bei einem Format hinterlegt, kann der Betrachter diese sehen und damit auf verschieden Arten umgehen.
(g) Suchfunktion mit Scan und eigener Markierung
   Die Suchfunktion mit Scan des Bildes, kann bei einer Art Forum genutzt werden. In diesem Bild kann der Betrachter nun selbst eine Markierung setzen mit einer Suchanfrage. Diese Suchanfrage wird zur Bearbeitung weitergeleitet. Die Filmstudios oder die dafür zuständigen Firmen können nun sehen, welches Produkt den Betrachter interessiert und den Vorgang bearbeiten.
(h) Ausgabe über QR-Code und Weiterleitung zu Homepage oder App Die Filmstudios haben z.B. die Möglichkeit, für jede Serie oder Film einen Individuellen QR-Code zu erstellen. Dieser QR-Code erscheint beispielsweise vor oder nach dem Film im Kino, im TV, bei BlueRay usw. Der Betrachter hat in einer Handyapp nun die Möglichkeit diesen Code zu scannen, um beispielsweise "Timecodes" oder Informationen zu erhalten.
(i) Erkennung des Standortes, z.B. für Fahrzeughändler Durch die Internetverbindung (egal über Handy, PC, oder TV) gibt es die Möglichkeit den nächsten Knotenpunkt des Betrachters zu orten. Es ist nun möglich, z.B. beim Interesse an einem bestimmten Fahrzeug Vertragshändler in der Nähe des Betrachters zu suchen, um beispielsweise eine Probefahrt zu vereinbaren.
(j) Digitale Fernsehzeitung
   Es kann die Funktion einer digitalen Fernsehzeitung geben. Diese Zeitung erkennt, welche Sender der Betrachter im Moment empfangen (z.B. FreeTV, PayTV, Streamingdienste) kann. Sollte es das Endgerät des Betrachters unterstützen, kann der Betrachter eine Verknüpfung zum Aufnehmen setzen.
(k) Erkennung über EPG-Informationen
   Sieht der Betrachter gerade TV und es ist keine Internetverbindung vorhanden (Im Moment oder generell), dann hat der Betrachter die Möglichkeit aufgrund der EPG-Informationen den "Timecode" auf dem TV zu sichern. Die Ausgabe von dem TV erfolgt als reine Information (Film, Datum, Uhrzeit, ggf. noch Szene), als Datei gespeichert z.B. auf einen USB-Stick oder per Funkverbindung an ein Smartphone oder als generierten QR-Code, welcher lokal auf Ihrem Empfangsgerät ausgegeben wird.
(l) Scanfunktion des Körpers
   Das Verfahren kann sich einer Art Scanner mit Kamera und Mikrofon bedienen, mit dem der Betrachter nicht nur das Menü per Gesten oder spezieller Fernbedienung steuern kann. Der Betrachter kann mit diesem Scanner auch seine Umgebung und sich selbst erfassen. Funktionen des Scanners:
   - Gestensteuerung;
   - Steuerung per Fernbedienung und Geste;
   - Körperscan (ggf. spezielle eng anliegende Kleidung von Nöten wie greenscreen), damit der Betrachter z.B. Kleidung von Interesse digital anprobieren kann. Auch ein Vermessen des Körpers des Betrachters ist möglich, wenn z.B. die Kleidergröße bestimmt werden soll;
   - Für den Scan der Umgebung benötigt das Programm ggf. Referenzpunkte für großen setzen zu können;
   - Mit dem Scanner (der ein separates Gerät oder bereits im Endgerät integriert ist) kann der Betrachter ggf. Videoanrufe zu seinen Kontakten schalten.
(m) Kinderkonto
   Es besteht die Möglichkeit ein Kinderkonto mit allen oder nur begrenzten Funktionen anzulegen. Bei diesem Konto kann auch ein begrenztes "Taschengeld" monatlich oder einmalig hinterlegt werden. Das Kinderkonto hat aber darüber hinaus auch noch weitere Funktionen. Es kann beispielsweise dem Kind erlauben, bestimmte Sendungen zu sehen und/oder am Tag nur eine bestimmte Zeit TV zu schauen. Das Programm kann derart ausgestaltet sein, dass es automatisch die Alterseinstufungen von Filmen und Sendungen erkennt und den Kindern entsprechend "verbieten" diese zu sehen. Eine Aufhebung kann nur durch Berechtigte erfolgen. Diese Funktionen werden z.B. mit einem Code oder einem Fingerabdruck aktiviert/deaktiviert.
(n) Suchauftrag
   Der Betrachter hat die Möglichkeit einen Suchauftrag zu generieren. Beispielsweise sucht der Betrachter zwei neue Jeans und ein Hemd. Dann gibt er dies in das Programm ein. Jetzt sieht der Betrachter beispielsweise zwei Stunden Serien und einen Film. Nachdem der Betrachter mit dem Fernsehen fertig ist, schlägt das Programm mit Bildern und Beschreibungen vor, als Listen oder Detailansicht, welche Kleidungsstücke der Betrachter in dieser Zeit gesehen hatoder welche für den Betrachter interessant sein könnten.
(o) Komplette Einkaufsliste
   Es gibt die Möglichkeit z.B. für einen Film eine komplette "Einkaufsliste" der "markierten" Produkte auszugeben.

Fig. 2 zeigt ein schematisches Ablaufdiagramm der einzelnen Verfahrensschritte eines Verfahrens zur Herstellung einer Videosequenz, in der dargestellte Produkte mit einem Identifikationsmerkmal versehen sind. Wie weiter oben beschrieben, ermöglicht das versehen der dargestellten Produkte mit einem Identifikationsmerkmal eine zuverlässige Durchführung der Schritte "Anfordern von Bestellinformationen", "Abrufen von Bestellinformationen" und "Übermitteln der Bestellinformationen" aus Fig. 1. Daher eignen sich Videosequenzen, die gemäß dem in Fig. 2 dargestellten Verfahren hergestellt wurden, besonders gut als Grundlage für das in Fig. 1 dargestellte Verfahren zur Bestellung eines Produkts.

Zunächst erfolgt eine Auswahl eines oder mehrere Produkte aus einer Datenbank, wobei die Datenbank für jedes Produkt ein Identifikationsmerkmal beinhaltet. Die Hersteller der Produkte erhalten über eine Schnittstelle einen personalisierten, gesicherten Zugang zur Datenbank (z.B. über VPN), um ihre Produkte in der Datenbank hinterlegen zu können. Nach Auswahl der Produkte werden diese real zur Verfügung gestellt. Anschließend erfolgt das Arrangieren der Produkte zu Szenen. Die Produkte sind hierbei mit einem Identifikationsmerkmal versehen. Das Identifikationsmerkmal liegt hierbei während der filmischen Abbildung in Form eines Farbcodes, eines Strichcodes, eines QR-Codes, einer Ziffernfolge und/oder einer Lasermarkierung vor. Dann erfolgt eine filmische Abbildung der Szenen, d.h. die Erzeugung einer Videosequenz als filmische Abbildung der Szenen. Schließlich erfolgt die Hinterlegung des Identifikationsmerkmals des jeweiligen Produkts als elektronisches Datensegment in der Videosequenz. Mit anderen Worten wird in der Videosequenz für jedes zu einem bestimmten Zeitpunkt dargestellte Produkt ein Identifikationsmerkmal in Form einer Identifikationsnummer oder ähnliches hinterlegt. Beim Abspielen der Videosequenz kann dieses Identifikationsmerkmal dann den in Fig. 1 beschriebenen Verfahrensschritten "Anfordern von Bestellinformationen", "Abrufen von Bestellinformationen" und "Übermitteln der Bestellinformationen" als Grundlage dienen.

Die oben beschriebene Datenbank, die für jedes Produkt ein Identifikationsmerkmal beinhaltet, kann wie folgt gebildet werden: Der Produkthersteller erzeugt einen Eintrag in der Datenbank, wobei der Eintrag insbesondere eine photographische Widergabe des Produkts und weitere Produktinformationen (Kaufpreis, Bestellinformationen, Produktbeschaffenheit) enthält. Ferner wird jedem Eintrag ein individuelles, eindeutiges Identifikationsmerkmal (z.B. Kennnummer) zugeteilt.

Die Auswahl eines oder mehrere Produkte aus der oben genannten Datenbank kann dann beispielsweise wie folgt durchgeführt werden:
1. Der Filmproduzent (d.h. derjenige, der eine Videosequenz herstellen möchte) baut eine sichere Verbindung zu der Datenbank, die für jedes Produkt ein Identifikationsmerkmal beinhaltet, auf.
2. Nun kann der Filmproduzent über ein Suchmenü nach Requisiten (d.h. Produkte, die in der Videosequenz abgebildet werden) suchen. Beispielsweise sucht der Filmproduzent eine Uhr für den Hauptdarsteller. Der Filmproduzent kann unter den Begriff "Uhr" suchen. Bei einer erweiterten Suche kann der Filmproduzent ggf. noch die Preisspanne des Produktes, die Lieferzeit, Extraleistungen und ähnliches angeben.
3. Nachdem der Filmproduzent die Uhr gesucht hat, kann er die Suchergebnisse mit weiteren Filtern eingrenzen.
4. Hat der Filmproduzent eine Uhr gefunden, die ihm zusagt, kann er diese näher betrachten. Er kann auch verschiedene Produkte vergleichen. Sollte der Produkthersteller dies zur Verfügung stellen, kann der Filmproduzent auch eine 3D-Version des Produktes betrachten.
5. Sollten sich der Filmproduzent nicht auf Anhieb für ein Produkt entscheiden können oder dürfen, kann er Kollegen oder Entscheidungsträger einladen abzustimmen oder zu entscheiden, welche der vorausgewählten Produkte das richtige ist (Diese Einladungen können per E-Mail verschickt werden, welche einen Link beinhaltet; dieser Link kann zu einer sicheren Homepage oder dem Programm selbst führen, wo abgestimmt werden kann; der Link und die Abstimmung kann auch nur zeitlich begrenzt verfügbar sein).
6. Sollten sich der Filmproduzent nicht entscheiden können, kann sich der Filmproduzent die Produkte zur Veranschaulichung zuschicken oder persönlich liefern lassen.
7. Abschließend kann sich der Filmproduzent entscheiden, welches Produkt er zu Szenen arrangiert.

Ergänzend bzw. alternativ zu dem oben beschriebenen Verfahren gibt es weitere Verfahren zum Generieren von Bestellinformation und/oder Identifikationsmerkmalen (im Folgenden auch Markierungen genannt), wobei zu unterscheiden ist, ob die Videosequenz bereits ein abgedrehtes Format ist oder erst noch gefilmt wird. Insbesondere:
(a) Automatische Erkennung
   Auch bei der automatischen Methode muss man unterscheiden in bereits abgedreht oder wird noch gedreht. Die wenigsten der unten beschriebenen Methoden funktioniert bei bereits abgedrehtem Material. Des Weiteren gibt es mehrere Methoden der Automatischen Erkennung der Produkte:
   - Erkennung durch einen Sender oder Empfänger, der am Produkt angebracht ist und den die Kamera erkennt. Diese Lösung ist z.B. die erste Wahl, wenn es um Liveübertragungen wie Sport geht;
   - Erkennung des Produktes durch einen speziellen Farbcode, der angebracht wurde (ähnlich Greenscreen) und danach wieder entfernt wird;
   - Erkennung durch einen Digitalen Bildpunkt der Eingefügt wird;
   - Erkennung durch Form / Farbe ähnlich wie bei der Gesichtserkennung;
   - Mit Lasermarkierung;
   - Pixelerkennung.
(b) Halbautomatische Erkennung (Verfolgung)
   Bei der halbautomatischen Erkennung muss man ebenfalls unterscheiden in bereits abgedreht und wird noch gedreht. Es gibt auch hier verschiedene Methoden, z.B. die Erkennung über einen bestimmten Bildbereich, der verfolgt wird. Bei dieser Methode laufen die Filmszenen weiter. Sollte die Markierung nicht mehr stimmen, muss der Bediener den Ablauf unterbrechen und nachjustieren.
(c) Manuelle Erkennung
   Die Manuelle Erkennung ist die wohl fehlerfreiste und einfachste Weise um die Markierungen in einem neuen Film oder einen bereits abgedrehten einzubringen. Sie funktioniert indem man den Punkt bzw. das Produkt, Bild für Bild verfolgt, indem man das zu markierende Produkt z.B. immer mit der Maus oder per Touch verfolgen muss. Die Geschwindigkeit der Abspielung kann geändert werden. Der Bediener kann hier auch einstellen, ob der Film von selbst bei der eingestellten Geschwindigkeit läuft oder ob er immer auf einer Taste bleiben muss.

## Patentansprüche

1. Verfahren zur Bestellung eines Produkts, aufweisend folgende Verfahrensschritte:
(a) Abspielen einer Videosequenz;
(b) Markieren eines Bildes der Videosequenz, in dem das Produkt gezeigt ist;
(c) Anzeigen des markierten Bildes;
(d) Markieren des Produktes;
(e) Anzeigen von Bestellinformationen über das Produkt; und
(f) Auslösen eines Bestellvorgangs für das Produkt.

2. Verfahren nach Anspruch 1, wobei das Anzeigen des Bildes nach dem Ende der Videosequenz erfolgt.

3. Verfahren nach einem der vorhergehenden Ansprüche, wobei ein Markieren verschiedener Bilder mit unterschiedlichen Produkten während des Abspielens der Videosequenz erfolgt und nach Ende der Videosequenz die Verfahrensschritte (c) bis (f) für jedes markierte Bild durchgeführt werden.

4. Verfahren nach Anspruch 1, wobei das Anzeigen des markierten Bildes unmittelbar nach dem Markieren des Bildes erfolgt.

5. Verfahren nach einem der vorhergehenden Ansprüche, wobei zwischen den Verfahrensschritten (d) und (e) folgende Verfahrensschritte durchgeführt werden:
(I) Anfordern von Bestellinformationen über das Produkt;
(II) Erzeugen der angeforderten Bestellinformationen oder Abrufen der angeforderten Bestellinformationen;
(III) Übermittlung der angeforderten Bestellinformationen.

6. Verfahren nach Anspruch 5, wobei das Erzeugen der angeforderten Bestellinformationen durch einen automatisierten Vergleich zwischen dem im markierten Bild abgebildeten Produkt und einer Produktdatenbank, insbesondere durch ein Mustererkennungsverfahren, erfolgt.

7. Verfahren nach einem der Ansprüche 5 oder 6, wobei das Abrufen der angeforderten Bestellinformationen durch eine Übermittlung eines das Produkt identifizierendes Identifikationsmerkmals und das Abrufen von für das Identifizierungsmerkmal in einer Datenbank hinterlegten Bestellinformationen erfolgt.

8. Verfahren nach Anspruch 7, wobei das Identifikationsmerkmal als elektronisches Datensegment in der Videosequenz hinterlegt ist, insbesondere derart, dass in dem elektronischen Datensegment für jedes Bild der Videosequenz das Identifikationsmerkmal des jeweils sichtbaren Produkts beinhaltet ist.

9. Verfahren nach einem der vorstehenden Ansprüche, wobei es sich bei der Videosequenz um eine Videosequenz handelt, die wie folgt hergestellt wurde:
(i) Auswahl eines oder mehrere Produkte aus einer Datenbank, wobei die Datenbank für jedes Produkt ein Identifikationsmerkmal beinhaltet;
(ii) Arrangieren des oder der ausgewählten Produkte zu Szenen;
(iii) Erzeugen einer Videosequenz als filmische Abbildung der Szenen;
(iv) Hinterlegung des Identifikationsmerkmals des jeweiligen Produkts als elektronisches Datensegment in der Videosequenz.

10. Verfahren nach Anspruch 9, wobei das bzw. die Produkte während der filmischen Abbildung der Szenen mit dem jeweiligen Identifikationsmerkmal versehen sind.

11. Verfahren nach Anspruch 10, wobei das Identifikationsmerkmal während der filmischen Abbildung in Form eines Farbcodes, eines Strichcodes, eines QR-Codes, einer Ziffernfolge und/oder einer Lasermarkierung vorliegt.

12. Verfahren nach einem der vorhergehenden Ansprüche, wobei eine Individualisierung des zu bestellenden Produkts, insbesondere eine Bestimmung der Farbe und/oder der Größe des zu bestellenden Produktes, erfolgt.

13. Verfahren nach Anspruch 12, wobei eine virtuelle Darstellung des Produkts in Kombination mit einer virtuellen Darstellung eines menschlichen Körpers erfolgt.

14. Verfahren nach Anspruch 13, wobei die virtuelle Darstellung des menschlichen Körpers durch einen Körperscanner erzeugt wird.
